# FASCICULE DE BREVET EUROPEEN

(11) **EP 2 356 341 B1**
(45) Date de publication et mention de la délivrance du brevet: **20.04.2016**
(21) Numéro de dépôt: 09795505.8
(22) Date de dépôt: 24.11.2009
(51) Int. Cl.: F15B 15/19

(54) **VERIN A COURSE DECLENCHEE POUR DISPOSITIF DE SECURITE INTEGRE A UN VEHICULE AUTOMOBILE, POUR LA PROTECTION D'UN PIETON EN CAS DE CHOC FRONTAL**
BETÄTIGER MIT AUSGELÖSTEM HUB FÜR EINE IN EIN KRAFTFAHRZEUG INTEGRIERTE SICHERHEITSVORRICHTUNG FÜR DEN SCHUTZ EINES FUSSGÄNGERS IM FALLE EINER FRONTALKOLLISION
TRIGGERED-STROKE ACTUATOR FOR A SAFETY DEVICE INCORPORATED INTO A MOTOR VEHICLE TO PROTECT A PEDESTRIAN IN THE EVENT OF A FRONTAL IMPACT

(30) Priorité: 26.11.2008 FR 0858026
(43) Date de publication de la demande: 17.08.2011
(73) Titulaire: HERAKLES, 33185 Le Haillan (FR)
(72) Inventeur: BORG, Evrard, F-33127 Martignas Sur Jalle (FR); LASPESA, Eric, F-84210 Althen des Paluds (FR); NADEAU, Jean-Paul, F-33160 Saint Médard en Jalles (FR)
(74) Mandataire: Intès, Didier Gérard André
(86) Numéro de dépôt international: PCT/FR2009/052270
(87) Numéro de publication internationale: WO 2010/061117

(56) Documents cités:
- DE-A1-102007 020 070
- DE-C1- 19 961 019
- FR-A- 2 910 941
- JP-A- 2007 303 673
- US-A- 3 107 616
- US-A- 4 412 420
- US-A- 5 988 680

## Description

L'invention se rapporte à un vérin à course déclenchée constituant l'élément moteur d'un système de sécurité équipant un véhicule automobile et ayant pour fonction de soulever rapidement le capot du véhicule en cas de collision avec un piéton.

L'invention concerne plus particulièrement un perfectionnement autorisant un retour arrière amorti de la tige de ce vérin et par conséquent un mouvement inverse amorti du capot après le choc et aussi, en cas de non choc, un repositionnement du capot dans sa position initiale, sous son propre poids ou avec un effort modéré, au bout d'un certain temps, après le déclenchement

Le brevet FR 2 878 212 décrit un système de sécurité pour la protection d'un piéton lorsque celui-ci est percuté par un véhicule automobile. Ce système comprend un mécanisme permettant de soulever rapidement le capot du véhicule automobile en cas de collision. En effet, lorsqu'une telle collision se produit, la tête du piéton heurte fréquemment le capot du véhicule. Ce choc de la tête sur le capot provoque des déformations du capot. Au-delà d'une certaine déformation, le capot entre en contact avec le bloc moteur et toutes les pièces rigides qui entourent le moteur. C'est à ce moment que la tête du piéton subit la plus forte décélération, pouvant causer de graves blessures. C'est pourquoi, le système mentionné ci-dessus est conçu pour soulever rapidement le capot d'une certaine hauteur, de manière à éviter que le piéton et notamment sa tête, vienne heurter le bloc moteur après une déformation du capot. Le soulèvement du capot est effectué au niveau de l'arrière de celui-ci, du côté du pare-brise. Le capot reste fixé à l'avant du véhicule automobile.

Ainsi, un tel système de sécurité, s'il est actionné à temps par des moyens de détection appropriés, permet de soulever le capot de quelques dizaines de millimètres en quelques dizaines de millisecondes (80mm et 30 milli-secondes sont des valeurs usuelles), c'est-à-dire dans un intervalle de temps très court après la détection d'un choc imminent. L'organe moteur d'un tel système comporte avantageusement un vérin à course déclenchée du type comprenant une charge pyrotechnique, mise à feu électriquement. Les gaz engendrés par la combustion de la charge repoussent le piston du vérin lui-même lié à une tige actionnant le mécanisme de soulèvement du capot, ou le capot lui-même, directement.

Par ailleurs, US 5,988,680 et DE 19 96 10 19 décrivent des vérins pyrotechniques du type comprenant deux charges, la seconde étant allumée par la première.

Il est connu, après soulèvement du capot, de permettre un retour amorti de celui-ci pour accompagner le choc sur le capot et amoindrir l'impact sur le piéton. Le système d'amortissement en retour est avantageusement combiné au vérin ayant soulevé le capot. De cette façon, l'ensemble constitué par le capot, le mécanisme de soulèvement et le piston du vérin se rétracte sous l'impact (après soulèvement et déformation du capot) tout en étant freiné, puis bloqué. Le dispositif d'amortissement est agencé dans le corps. Il fait appel à des moyens mécaniques.

Un moyen d'assurer un effet anti-retour avec amortissement est de maintenir la chambre de pressurisation du vérin sous une pression suffisamment élevée pour limiter son déplacement en retour. Ce temps d'attente est typiquement de 300 ms. L'utilisation d'une charge pyrotechnique à plus forte masse assurant à la fois la pressurisation du piston pour le déploiement rapide du vérin et le maintien en pression de la chambre du piston n'est pas envisageable. En effet, une charge pyrotechnique de ce type impliquerait un déploiement trop brutal du vérin risquant d'endommager le mécanisme de déploiement et le capot.

L'homme du métier est donc toujours à la recherche d'un dispositif simple, ne nécessitant pas de mécanisme particulier, pour un vérin, permettant son déploiement à faible effort en un temps bref (typiquement 30ms), puis un maintien en effort anti-retour avec amortissement pendant un durée longue (typiquement de 300ms), puis relâchement de l'effort pour un retour à effort faible du vérin, par exemple par simple effort de gravité après un temps long typiquement de plusieurs secondes.

L'invention permet en premier lieu d'assurer cette fonction de retour amorti du capot par des moyens plus simples.

A cet effet, l'invention concerne un vérin à course déclenchée tel que défini dans la revendication 1 comportant un corps abritant un piston lié à une tige faisant saillie à une extrémité dudit corps et un générateur de gaz commandé, monté dans ledit corps en regard dudit piston et à une distance prédéterminée d'une position initiale avant déclenchement de celui-ci, pour définir une chambre d'expansion entre ledit générateur de gaz et ledit piston, ledit générateur de gaz incluant une charge pyrotechnique à combustion rapide, caractérisé en ce qu'il comporte une charge pyrotechnique à combustion plus lente que celle dudit générateur de gaz, logée en un emplacement communiquant avec ladite chambre d'expansion. Avantageusement la charge pyrotechnique à combustion lente est mise à feu par la combustion de ladite charge pyrotechnique à combustion rapide.

Ladite charge pyrotechnique à combustion lente peut être logée dans ledit générateur de gaz incluant la charge pyrotechnique à combustion rapide, c'est-à-dire par exemple dans un boîtier en plastique à conduite filaire permettant l'initiation commandée desdites charges pyrotechniques. Selon un seconde variante avantageuse, lesdites charges pyrotechniques à combustion rapide et lente sont logées séparément dans le vérin, en communication avec la chambre d'expansion. Cette variante permet de séparer les fonctions des charges et de pouvoir modifier chaque fonction indépendamment en fonction du besoin de chaque application.

Il arrive en outre que le système de sécurité soit actionné et par conséquent que le capot soit soulevé sans que l'accident ait lieu, par exemple en cas de détection erronée. Il se peut aussi que le piéton ne heurte pas le capot. Dans une telle circonstance, il est souhaitable que le capot puisse reprendre sa position initiale, au bout d'un certain temps après le déclenchement.

L'invention permet aussi ce repositionnement du capot, automatiquement, par exemple sous l'effet de son propre poids.

A cet effet, un passage de fuite calibré est pratiqué dans le piston et éventuellement la tige pour évacuer les gaz ayant provoqué le déplacement du piston.

Avantageusement, le piston et la tige sont rigidement solidaires l'un de l'autre et le passage de fuite débouche à la surface de la tige dans un espace annulaire défini entre celle-ci et la paroi intérieure du corps.

De cette façon, la sortie du passage de fuite n'est en communication avec l'extérieur que lorsque le vérin est déclenché. Pendant toute la période où le vérin n'a pas été déclenché, aucune corrosion n'est à craindre et les charges pyrotechniques sont à l'abri du milieu extérieur. Les éléments métalliques internes du vérin peuvent être réalisés dans des métaux peux coûteux sans nécessiter de traitement anticorrosion particulier.

La charge pyrotechnique supplémentaire à combustion lente se consume en environ trois dixièmes de seconde après le déploiement et maintient une pression suffisante dans la chambre pour permettre le retour amorti du capot pendant l'accident.

En revanche, en cas de déclenchement non suivi de choc, un temps plus long est nécessaire pour que les gaz s'évacuent par le passage de fuite. Le piston se rétracte alors dans le corps du vérin permettant au capot de reprendre sa place sous l'effet de son propre poids ou moyennant un effort modéré sur le capot lui-même.

L'invention sera mieux comprise et d'autres avantages de celle-ci apparaîtront plus clairement à la lumière de la description qui va suivre d'un mode de réalisation actuellement préféré d'un vérin à course déclenchée conforme à son principe, donnée uniquement à titre d'exemple et faite en référence aux dessins annexés dans lesquels :
- la figure 1 est une vue schématique en coupe longitudinale d'un vérin à course déclenchée conforme à l'invention ;
- la figure 2 est un graphe illustrant la force développée par le vérin au cours du temps, à partir du déclenchement.

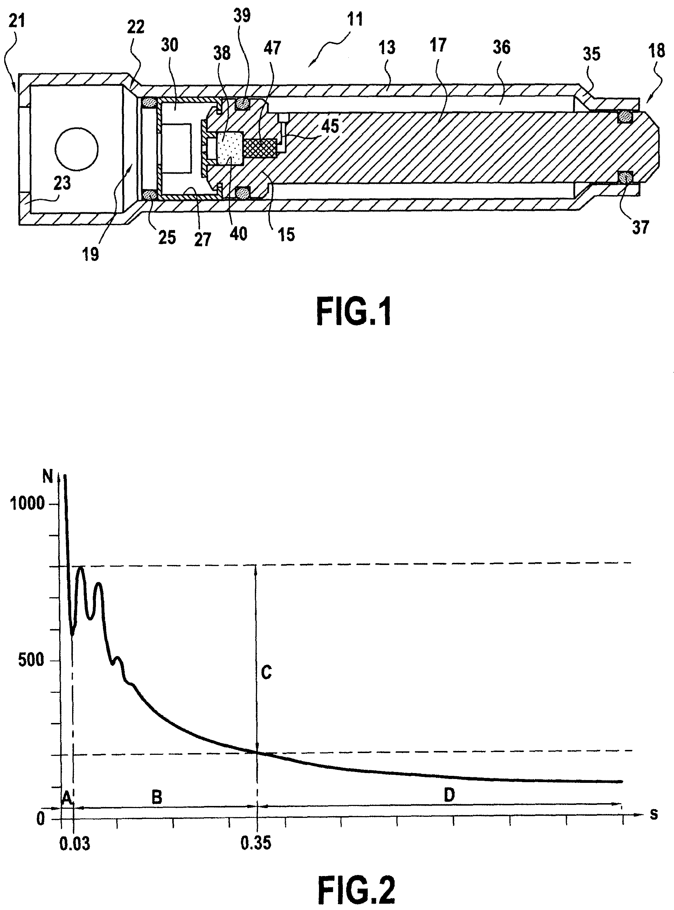

Sur la figure 1, on a représenté un vérin 11, à course déclenchée comportant un corps 13, globalement cylindrique abritant un piston 15 lié à une tige 17 faisant saillie axialement à une extrémité 18 du corps. Le corps 13 abrite aussi un générateur de gaz 19, de façon avantageuse un micro générateur de gaz en conduite filaire, commandé électriquement et monté dans le corps en regard du piston, à une distance prédéterminée de celui-ci. Le générateur de gaz 19 est immobilisé à l'autre extrémité 21 du corps par un rétreint 22 de celui-ci et une butée arrière 23. Un joint annulaire 25 est placé entre le générateur de gaz 19 et la paroi interne du corps. Un élément de liaison 27, cassable ou déconnectable est intercalé entre le générateur et le piston. Il maintient donc le piston 15 à une distance prédéterminée du générateur de gaz, pour stabiliser, avant actionnement, la position du piston 15 et de la tige 17 et définir le volume initial d'une chambre d'expansion 30, entre le générateur de gaz et la face en regard dudit piston.
Le générateur de gaz 19 comporte une charge pyrotechnique à combustion rapide. Lorsque la charge est mise à feu, les gaz éjectés dans la chambre d'expansion 30 provoquent la rupture ou la déconnexion de l'élément de liaison 27 et propulsent l'ensemble piston/tige en sorte que ladite tige fasse saillie rapidement et axialement à l'extrémité du corps. Ce mouvement permet de déclencher un mécanisme de soulèvement du capot, non représenté. De façon simple et avantageuse, la tige peut même être directement articulée au capot.

A l'extrémité du corps où fait saillie la tige, on observe un rétreint 35 qui ménage un espace annulaire longitudinal 36 entre la tige et la paroi interne du corps. Comme représenté, un joint d'étanchéité 37 est porté par la tige au voisinage de son extrémité faisant saillie vers l'extérieur. Ce joint s'étend entre la tige 17 et la paroi intérieure du corps au voisinage de son extrémité 18 correspondante. Ainsi, pendant toute la période qui précède la mise à feu, l'espace annulaire 36 est isolé du milieu extérieur. L'espace annulaire est aussi isolé de la chambre d'expansion au moyen d'un joint torique 39 disposé entre ledit piston 15 et ledit corps 13.

Selon une caractéristique importante de l'invention, le vérin 11 comporte aussi une charge pyrotechnique 38 à combustion plus lente que celle dudit générateur de gaz. Cette deuxième charge, sous forme d'une pastille de poudre compactée, est logée en un emplacement communiquant avec la chambre d'expansion 30 de façon à être mise à feu par la combustion de la charge pyrotechnique à combustion rapide.

Dans l'exemple représenté, la charge pyrotechnique à combustion lente est placée dans une cavité 40 du piston débouchant dans la chambre d'expansion.

La charge 38 est maintenue en place grâce à un couvercle, percé en son centre, engagé dans l'orifice de la cavité 40.

Avantageusement, cette cavité débouche dans la chambre d'expansion 30 axialement en regard du générateur de gaz.

La figure 2 illustre le résultat de la combinaison des combustions successives des deux charges. En ordonnée on a représenté la force communiquée axialement au piston par l'expansion des gaz et en abscisse on a représenté le temps. On observe qu'une poussée très importante mais brève est communiquée par la charge à combustion rapide (A). Cette poussée dépasse 1000 N mais chute très rapidement jusqu'à 500 N, environ en une durée de quelques dizaines de millisecondes, typiquement 30ms. Ceci correspond au déplacement du piston et donc au déclenchement du système de sécurité assurant la levée du capot. La décroissance rapide ne permettrait pas un amortissement en retour suffisant. Cependant, conformément à l'invention, la charge pyrotechnique à combustion lente 38 est mise à feu ce qui permet de rétablir une certaine force à décroissance beaucoup plus lente, comme représenté. On estime que la force développée est globalement suffisante et que sa décroissance soit suffisamment lente jusqu'à quelques dixièmes de seconde (B) pour assurer l'amortissement recherché, la force opposée par le piston évoluant dans une plage de quelques centaines de newtons (C).

De plus, selon une autre caractéristique avantageuse, un passage de fuite calibré 45 est pratiqué dans le piston et (éventuellement) la tige pour évacuer les gaz de combustion. Ce passage de fuite calibrée 45 est suffisamment petit pour ne pas avoir d'effet significatif lors de la phase de pressurisation de la chambre d'expansion 30 générée par la combustion des deux charges pyrotechniques. La dimension du passage est ajustée pour permettre ensuite un débit de fuite des gaz de combustion contenus dans la chambre d'expansion 30 suffisant pour assurer la décroissance de l'effort en retour dans la plage spécifiée (D) et donc la remise en position du capot à moindre effort, éventuellement sous l'effet de son propre poids.

Dans l'exemple décrit, où le piston et la tige sont rigidement solidaires l'un de l'autre, le passage de fuite 45 débouche à la surface de la tige dans l'espace annulaire 36 décrit ci-dessus. Il communique avec la cavité 40 du piston qui abrite la charge pyrotechnique 38 à combustion lente. En outre, un filtre 47 est agencé dans le piston entre la cavité 40 et le passage de fuite calibré 45. Ce filtre permet d'éviter que des particules issues de la combustion viennent obturer le passage de fuite calibré.

Cet agencement est favorable à une diminution lente de la pression dans la chambre d'expansion et par conséquent de la force développée sur le piston, au-delà du temps correspondant au retour amorti du piston. Cette décroissance de la pression et de la force se poursuit jusqu'à une valeur suffisamment faible, typiquement au bout de quelques secondes, pour que le capot puisse reprendre sa position initiale automatiquement dans le cas favorable où il n'a pas été endommagé.

## Revendications

1. Vérin à course déclenchée comportant un corps (13) abritant un piston (15) lié à une tige (17) faisant saillie à une extrémité dudit corps et un générateur de gaz (19) commandé, monté dans ledit corps en regard dudit piston et à une distance prédéterminée d'une position initiale avant déclenchement de celui-ci, pour définir une chambre d'expansion (30) entre ledit générateur de gaz et ledit piston, ledit générateur de gaz incluant une charge pyrotechnique à combustion rapide,
ledit vérin comportant une charge pyrotechnique (38) à combustion plus lente que celle dudit générateur de gaz, logée en un emplacement communiquant avec ladite chambre d'expansion,
**caractérisé en ce qu'**un passage de fuite calibré (45), communiquant avec la chambre d'expansion est pratiqué dans le piston (15) et la tige (17),
**en ce que** le piston (15) et la tige (17) sont rigidement solidaires et ledit passage de fuite (45) débouche à la surface de ladite tige dans un espace annulaire (36) défini entre celle-ci et la paroi intérieure dudit corps, et
**en ce qu'**un joint d'étanchéité (37) est porté par la tige au voisinage de son extrémité extérieure libre et, en position non-activée du vérin, le joint s'étend entre ladite tige et la paroi intérieure du corps située au voisinage de l'extrémité du corps dont fait saillie la tige.

2. Vérin à course déclenchée selon la revendication 1, **caractérisé en ce que** ladite charge pyrotechnique à combustion lente (38) est placée dans une cavité (40) du piston, débouchant dans ladite chambre d'expansion (30).

3. Vérin à course déclenchée selon la revendication 2, **caractérisé en ce que** ladite cavité (40) débouche dans ladite chambre d'expansion axialement en regard dudit générateur de gaz (19).

4. Vérin à course déclenchée selon la revendication 2 ou 3, **caractérisé en ce que** ledit passage de fuite (45) communique avec ladite cavité (40) du piston qui abrite ladite charge pyrotechnique à combustion lente.

5. Vérin à course déclenchée selon la revendication 4, **caractérisée en ce qu'**un filtre (47) est agencé dans le piston entre ladite cavité (40) et ledit passage de fuite calibré (45).

6. Vérin à course déclenchée selon la revendication 1, **caractérisé en ce que** ladite charge pyrotechnique à combustion lente (38) est placée dans le générateur de gaz incluant ladite charge pyrotechnique à combustion rapide, débouchant dans ladite chambre d'expansion (30).

7. Vérin à course déclenchée selon l'une quelconque des revendications 1 à 6, **caractérisé en ce que** l'espace annulaire (36) est isolé de la chambre d'expansion (30) au moyen d'un joint torique (39) disposé entre ledit piston (15) et ledit corps (13).

8. Vérin selon l'une des revendications 1 à 7, **caractérisé en ce qu'**il comporte un élément de liaison (27) cassable ou déconnectable, maintenant le piston à une distance prédéterminée du générateur de gaz pour stabiliser, avant actionnement, la position de la tige et le volume initial de la chambre d'expansion.

## Patentansprüche

1. Zylinder mit ausgelöstem Hub, umfassend ein Gehäuse (13), in dem ein Kolben (15), welcher mit einer an einem Ende des Gehäuses vorspringenden Stange (17) verbunden ist, sowie ein gesteuerter Gasgenerator (19) aufgenommen sind, welcher in dem Gehäuse gegenüber dem Kolben und in einem vorbestimmten Abstand von einer Ausgangsstellung vor dessen Auslösen angebracht ist, um eine Ausdehnungskammer (30) zwischen dem Gasgenerator und dem Kolben zu definieren, wobei der Gasgenerator eine schnell verbrennende pyrotechnische Ladung enthält,
wobei der Zylinder eine langsamer als diejenige des Gasgenerators verbrennende pyrotechnische Ladung (38) umfasst, die an einer mit der Ausdehnungskammer in Verbindung stehenden Stelle untergebracht ist,
**dadurch gekennzeichnet, dass** ein kalibrierter Entweichungsdurchgang (45), der mit der Ausdehnungskammer in Verbindung steht, in dem Kolben (15) und der Stange (17) ausgebildet ist,
dass der Kolben (15) und die Stange (17) starr verbunden sind und der Entweichungsdurchgang (45) an der Oberfläche der Stange in einen ringförmigen Raum (36), der zwischen dieser und der Innenwand des Gehäuses definiert ist, mündet, und
dass eine Dichtung (37) von der Stange in der Nähe ihres freien äußeren Endes getragen ist und sich die Dichtung in nicht aktivierter Stellung des Zylinders zwischen der Stange und der Innenwand des Gehäuses, die in der Nähe des Endes des Gehäuses, von dem die Stange vorspringt, gelegen ist, erstreckt.

2. Zylinder mit ausgelöstem Hub nach Anspruch 1, **dadurch gekennzeichnet, dass** die langsam verbrennende pyrotechnische Ladung (38) in einem Hohlraum (40) des Kolbens, der in die Ausdehnungskammer (30) mündet, angeordnet ist.

3. Zylinder mit ausgelöstem Hub nach Anspruch 2, **dadurch gekennzeichnet, dass** der Hohlraum (40) axial gegenüber dem Gasgenerator (19) in die Ausdehnungskammer mündet.

4. Zylinder mit ausgelöstem Hub nach Anspruch 2 oder 3, **dadurch gekennzeichnet, dass** der Entweichungsdurchgang (45) mit dem Hohlraum (40) des Kolbens, in dem die langsam verbrennende pyrotechnische Ladung aufgenommen ist, in Verbindung steht.

5. Zylinder mit ausgelöstem Hub nach Anspruch 4, **dadurch gekennzeichnet, dass** ein Filter (47) in dem Kolben zwischen dem Hohlraum (40) und dem kalibrierten Entweichungsdurchgang (45) angeordnet ist.

6. Zylinder mit ausgelöstem Hub nach Anspruch 1, **dadurch gekennzeichnet, dass** die langsam verbrennende pyrotechnische Ladung (38) in dem die schnell verbrennende pyrotechnische Ladung enthaltenden Gasgenerator, der in die Ausdehnungskammer (30) mündet, angeordnet ist.

7. Zylinder mit ausgelöstem Hub nach einem der Ansprüche 1 bis 6, **dadurch gekennzeichnet, dass** der ringförmige Raum (36) mittels eines zwischen dem Kolben (15) und dem Gehäuse (13) angeordneten O-Rings (39) von der Ausdehnungskammer (30) isoliert ist.

8. Zylinder nach einem der Ansprüche 1 bis 7, **dadurch gekennzeichnet, dass** er ein zerbrechliches oder trennbares Verbindungselement (27) umfasst, das den Kolben in einem vorbestimmten Abstand von dem Gasgenerator hält, um vor Betätigung die Position der Stange und das Ausgangsvolumen der Ausdehnungskammer zu stabilisieren.

## Claims

1. A triggered-stroke actuator comprising a body (13) housing a piston (15) linked to a rod (17) that projects from one end of said body, and a controlled gas generator (19) mounted in said body facing said piston and at a predetermined distance from an initial position thereof prior to triggering so as to define an expansion chamber (30) between said gas generator and said piston, said gas generator including a fast combustion pyrotechnic charge, said actuator including a pyrotechnic charge (38) of combustion that is slower than the combustion of said gas generator and that is housed in a location that communicates with said expansion chamber,
**characterized in that** a calibrated leakage passage (45) communicating with said expansion chamber is formed in the piston (15) and in the rod (17), **in that** the piston (15) and the rod (17) are rigidly secured to each other, and
**in that** said leakage passage (45) opens out through the surface of said rod into an annular space (36) defined between the rod and the inside wall of said body, and
**in that** a sealing gasket (37) is carried by the rod in the vicinity of its free outer end and, in the non-activated position of the actuator, the gasket extends between said rod and the inside wall of said body in the vicinity of the end of the body from which the rod projects.

2. A triggered-stroke actuator according to claim 1, **characterized in that** said slow combustion pyrotechnic charge (38) is placed in a cavity (40) in the piston, the cavity opening out into said expansion chamber (30).

3. A triggered-stroke actuator according to claim 2, **characterized in that** said cavity (40) opens out into said expansion chamber axially facing said gas generator (19).

4. A triggered-stroke actuator according to claim 2 or 3, **characterized in that** said leakage passage (45) communicates with said cavity (40) in the piston that houses said slow combustion pyrotechnic charge.

5. A triggered-stroke actuator according to claim 4, **characterized in that** a filter (47) is arranged in the piston between said cavity (40) and said calibrated leakage passage (45).

6. A triggered-stroke actuator according to claim 1, **characterized in that** said slow combustion pyrotechnic charge (38) is placed in the gas generator including said fast combustion pyrotechnic charge, opening out into said expansion chamber (30).

7. A triggered-stroke actuator according to any one of claims 1 to 6, **characterized in that** the annular space (36) is isolated from the expansion chamber (30) by means of an O-ring (39) arranged between said piston (15) and said body (13).

8. An actuator according to any one of claims 1 to 7, **characterized in that** it includes a breakable or disconnectable connection element (27) holding the piston at a predetermined distance from the pyrotechnic generator to act, prior to actuation, to stabilize the position of the rod and the initial volume of the expansion chamber.
